(19) Europäisches Patentamt / European Patent Office / Office européen des brevets

(11) **EP 2 644 676 B1**

(12) **EUROPEAN PATENT SPECIFICATION**

(45) Date of publication and mention
of the grant of the patent:
**12.08.2015 Bulletin 2015/33**

(21) Application number: **11842967.9**

(22) Date of filing: **18.11.2011**

(51) Int Cl.:
*C09J 133/04* (2006.01)    *C09J 9/00* (2006.01)
*C09J 7/02* (2006.01)    *C09J 11/00* (2006.01)

(86) International application number:
**PCT/KR2011/008839**

(87) International publication number:
**WO 2012/070807 (31.05.2012 Gazette 2012/22)**

(54) **ADHESIVE COMPOSITION FOR TOUCH PANEL, ADHESIVE FILM, AND TOUCH PANEL**

HAFTZUSAMMENSETZUNG FÜR EINEN BERÜHRUNGSBILDSCHIRM, HAFTFILM UND
BERÜHRUNGSBILDSCHIRM

COMPOSITION ADHÉSIVE POUR ÉCRAN TACTILE, FILM ADHÉSIF, ET ÉCRAN TACTILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2010 KR 20100117762**

(43) Date of publication of application:
**02.10.2013 Bulletin 2013/40**

(73) Proprietor: **LG Hausys, Ltd.
Seoul 150-876 (KR)**

(72) Inventors:
• **KIM, Jang-Soon
Seongnam-si
Gyeonggi-do 463-889 (KR)**
• **SONG, Min-Seok
Gyeonggi-do 431-080 (KR)**
• **PARK, Eun-Kyung
Seoul 122-881 (KR)**
• **KIM, Seong-Jin
Suwon-si
Gyeonggi-do 443-801 (KR)**
• **CHA, Hyung-Min
Cheongju-si
Chungcheongbuk-do 361-300 (KR)**
• **LEE, Won-Yup
Cheongju-si
Chungcheongbuk-do 361-856 (KR)**
• **KIM, Woong-Gi
Chungcheongbuk-do 361-856 (KR)**

(74) Representative: **Zacco Denmark A/S
Arne Jacobsens Allé 15
2300 Copenhagen S (DK)**

(56) References cited:
EP-A1- 1 574 557    EP-A2- 2 033 998
JP-A- 2001 335 757    JP-A- 2005 255 877
KR-A- 20100 022 945    US-A1- 2010 255 253

**Description**

The present invention relates to an adhesive composition for a touch panel, an adhesive film, and a touch panel.

[Background Art]

Recently, the market for electronic equipment, such as personal digital assistants (PDAs), mobile communication terminals, or automotive navigation systems, is growing. Such electronic equipment is moving towards slimness, light weight, low power consumption, high resolution, and high brightness.

An electronic device equipped with a touchscreen or touch panel switch as an input device uses a transparent conductive plastic film to reduce weight and prevent breakage. An example of the transparent conductive plastic film is a polyethylene terephthalate (PET) base film having a conductive layer of indium tin oxide (ITO) formed on one side thereof, which is stacked on conductive glass, a reinforcing material, or a decorative film through an adhesive film.

An adhesive used to attach transparent conductive film in a touchscreen or touch panel is required to have various physical properties, such as surface leveling properties for relieving an uneven surface due to a decorative film, durability for suppressing generation of curls or bubbles when exposed to severe conditions, e.g., high temperature or high humidity, cuttability for preventing the adhesive from sticking out or being squeezed when cut, and excellent adhesion and wettability to various substrates as well as cohesiveness. Further, since a touch panel or touchscreen is frequently touched by body parts, such as a hand or a face, in use, the adhesive also needs to have resistance to sebum produced in the body, i.e., chemical resistance.

EP 1 574 557 discloses a transparent double-sided pressure-sensitive adhesive tape or sheet contains a transparent substrate and a transparent pressure-sensitive adhesive layer disposed on each side of the substrate, wherein the transparent pressure-sensitive adhesive disposed on at least one side of the transparent substrate is a layer formed from a pressure-sensitive adhesive composition containing a specific acrylic polymer (a) an a specific oligomer (b). The acrylic polymer (a) has an weight-average molecular weight of 500.000 - 900.000 formed from monomers comprising at least one alkyl (meth) acrylate in which the alkyl group has 4-12 carbon atoms as the main monomer ingredient and at least one carboxyl-containing monomer contained as another monomer ingredient in an amount of 3-10 parts by weight per 100 parts/weight of all monomer ingredients.

EP 2 033 998 discloses a pressure-sensitive adhesive composition containing an acrylic polymer and a crosslinking agent. The acrylic polymer has a weight-average molecular weight of 400.000-1600.000 and contains at least an alkoxy alkyl acrylate (component A) and an acrylic monomer having a crosslinkable functional group (component B). The monomer components constituting at the acrylic polymer contain 45 - 99.5 parts by weight of component A and 0.5-4.5 parts by weight of component B to 100 parts by weight of total monomer components constituting the acrylic polymer, and the monomer components constituting the acrylic polymer contain no carboxyl-containing monomers. The compositions according to this document show excellent coatability, transparency, adhesion and resistance to blistering/separation and concurrently have anticorrosive properties.

US 2010/255253 discloses a double-sided pressure-sensitive adhesive sheet, which includes a pressure-sensitive adhesive layer formed from a pressure-sensitive adhesive composition containing an acrylic polymer. The acrylic polymer is constituted from one or more monomer components containing a (meth)acrylic acid alkyl ester wherein the number of carbons of the alkyl group is from 1 to 12 and/or a (meth)acrylic acid alkoxy alkyl ester, in which the soluble fraction obtained by ethyl acetate extraction of the pressure-sensitive adhesive layer has a weight average molecular weight of from 50.000 to 500.000 and the pressure-sensitive adhesive layer has a thickness unevenness of the whole surface of 0.030 $\mu$m or less.

[Technical Problem]

The present invention is aimed at providing an adhesive composition for a touch panel, an adhesive film, and a touch panel.

[Technical Solution]

In accordance with one aspect of the present invention, an adhesive composition for a touch panel includes: a partially polymerized acrylic resin; a multifunctional crosslinking agent in an amount of 0.01 to 10 parts by weight based on 100 parts by weight of the partially polymerized acrylic resin; and an urethane acrylate, and satisfies Equations 1 and 2:

$$\text{Equation 1: } X_1 \geq\, = 85\% \text{ and}$$

$$\text{Equation 2: } X_2 \leq 0.3 \text{ mm,}$$

wherein $X_1$ is the gel content of an adhesive that is a cured product of the adhesive composition, and $X_2$ is the distance of artificial sebum permeating a lateral side of a sample measured after soaking the sample in artificial sebum, the sample being prepared by attaching an adhesive that is a cured product of the adhesive composition to a substrate.

In accordance with another aspect of the present invention, an adhesive film for a touch panel includes: a base film; and an adhesive layer formed on one or both sides of the base film and including a cured product of the adhesive composition according to the present invention.

In accordance with a further aspect of the present invention, a touch panel includes: a conductive plastic film having a conductive layer formed on one surface thereof; and an adhesive layer attached to the conductive layer of the conductive plastic film and including a cured product of the adhesive composition according to the present invention.

[Advantageous Effects]

According to the present invention, an adhesive composition for a touch panel or an adhesive film has excellent chemical resistance and durability under high-temperature or high-humidity conditions and superior wettability and adhesion to various objects.

Fig. 1 is a sectional view of an adhesive film according to one embodiment of the present invention.
Fig. 2 is a sectional view of an adhesive film according to another embodiment of the present invention.
Fig. 3 illustrates a touch panel according to one embodiment of the present invention.
Fig. 4 illustrates a touch panel according to another embodiment of the present invention.

The present invention relates to an adhesive composition for a touch panel which includes a partially polymerized acrylic resin, a multifunctional crosslinking agent in an amount of 0.01 to 10 parts by weight based on 100 parts by weight of the partially polymerized acrylic resin, and an urethane acrylate, and satisfies Equations 1 and 2:

$$\text{Equation 1: } X_1 \geq = 85\% \text{ and}$$

$$\text{Equation 2: } X_2 \leq 0.3 \text{ mm,}$$

wherein $X_1$ is the gel content of an adhesive that is a cured product of the adhesive composition, and $X_2$ is the distance of artificial sebum permeating a lateral side of a sample measured after soaking the sample in artificial sebum, the sample being prepared by attaching an adhesive that is a cured product of the adhesive composition to a substrate.

Hereinafter, the adhesive composition for the touch panel of the present invention will be described in detail.

The adhesive composition according to the present invention includes a partially polymerized acrylic resin and a multifunctional crosslinking agent and has a gel content satisfying Equation 1. In the present invention, the gel content ($X_1$) may be calculated by Equation 3:

$$\text{Equation 3: } X_1 = B/A \times 100,$$

where A is the mass of the adhesive, and B is the dry mass of an insoluble fraction of the adhesive obtained by depositing the adhesive in ethyl acetate at room temperature for 24 hours, collecting the insoluble fraction, and removing ethyl acetate from the insoluble fraction.

Specifically, the gel content may be measured as follows. First, the adhesive composition of the present invention is prepared into an adhesive, and a predetermined mass (A) of the adhesive is taken. Then, the adhesive is deposited in ethyl acetate at room temperature for 24 hours, after which an insoluble fraction of the adhesive is collected. Subsequently, the insoluble fraction is dried under appropriate conditions to remove ethyl acetate, followed by measuring the mass of the insoluble fraction (as dry mass B). The obtained masses are substituted into Equation 3, thereby calculating gel content. The conditions for drying the insoluble fraction to measure the dry mass are not particularly limited as long as ethyl acetate contained in the insoluble fraction can be thoroughly removed.

The adhesive produced from the adhesive composition of the present invention has a gel content of 85% or more, preferably 90% or more, and more preferably 95% or more. If the gel content of the adhesive is adjusted to 85% or more, the adhesive can have excellent wettability or adhesion to a variety of objects and superior chemical resistance, such as sebum resistance, particularly when applied to a touch panel.

In the present invention, an upper limit of the gel content of the adhesive is, without being particularly limited, preferably 99% or less, more preferably 97% or less.

The adhesive composition of the present invention also satisfies Equation 2. That is, an adhesive that is a cured product of the adhesive composition has a permeating distance ($X_2$) of artificial sebum of 0.3 mm or shorter, preferably 0.2 mm or shorter.

In the present invention, there is no particular restriction as to a method of measuring the distance of the artificial sebum permeating the adhesive. For example, the permeating distance may be measured as follows. First, an adhesive is manufactured from the adhesive composition of the present invention and attached to a substrate, which is cut into a 1 in x 1 in (width x length) piece, thus preparing a sample. Then, the sample is soaked in artificial sebum for 5 to 20 minutes, followed by measuring the distance of the artificial sebum permeating through a lateral side of the sample, that is, a bonded interface between the adhesive and glass, using a Vernier caliper. In the present invention, there is no particular restriction as to artificial sebum, and ESTASAN 3580 (manufactured by Kosher) is used as artificial sebum in the present embodiment. In detail, the permeating distance of the artificial sebum may be measured according to a process to be mentioned in the following example of the specification.

In the present invention, there is no particular restriction as to the kind of the substrate. For example, glass may be used.

If the permeating distance of the artificial sebum through the sample, manufactured using the adhesive and the substrate, is adjusted to 0.3 mm or shorter, the adhesive can have excellent wettability or adhesion to a variety of objects and superior chemical resistance, such as sebum resistance, particularly when applied to a touch panel.

In the present invention, a lower limit of the permeating distance of the artificial sebum is, without being particularly limited, preferably close to 0 mm. If the artificial sebum does not permeate the adhesive, damage to a sensor in a touch panel can be prevented, thus extending the life of the touch panel.

The partially polymerized acrylic resin has a weight average molecular weight of 1,000,000 or more, preferably 1,000,000 to 1,500,000. In the present invention, weight average molecular weight is based on a polystyrene standard, measured by gel permeation chromatography (GPC). If the partially polymerized acrylic resin has a weight average molecular weight of 1,000,000 or more, an adhesive can have excellent durability under high-temperature or high-humidity conditions and does not contaminate an object by transfer to the object in re-peeling.

In the present invention, the partially polymerized acrylic resin has a mixed state of a pre-polymer and a monomer. The pre-polymer is a polymer in an intermediate state, which is capable of undergoing further polymerization.

The partially polymerized acrylic resin has a degree of polymerization of 5% to 60%, preferably 10 to 35%. In the present invention, the degree of polymerization refers to a weight ratio of monomers polymerized into polymers to monomers used in polymerization. If the degree of polymerization is less than 5%, the coatability of the adhesive can decrease due to low viscosity. If the degree of polymerization is greater than 60%, the viscosity of the adhesive can increase, thereby deteriorating processability.

There is no particular restriction as to a composition of the partially polymerized acrylic resin. In the present invention, the acrylic resin may be, for example, a polymer of a monomer mixture including a (meth)acrylic acid ester monomer and a crosslinking monomer.

There is no particular restriction as to the kind of the (meth)acrylic acid ester monomer, which may include, for example, alkyl (meth)acrylates. In this case, when too long of an alkyl group is included in the monomer, the cohesiveness of the cured product may decrease and the glass transition temperature or tack of the cured product may not be properly adjusted. Thus, alkyl (meth)acrylates having a C1 to C14, preferably C1 to C8, alkyl group are used. Examples of such monomers may include methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isobornyl (meth)acrylate, or isononyl methacrylate, which may be used alone or as mixtures.

The crosslinking monomer included in the monomer mixture is a monomer including both a copolymerizable functional group (e.g., carbon-carbon double bond) and a crosslinking functional group and may provide a polymer with a crosslinking functional group reacting with the multifunctional crosslinking agent.

Examples of the crosslinking monomer may include a hydroxyl group containing monomer, a carboxylic group containing monomer, or a nitrogen containing monomer, which may be used alone or as mixtures. Examples of the hydroxyl group containing monomer may include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, or 2-hydroxypropylene glycol (meth)acrylate, without being limited thereto. Examples of the carboxylic group containing monomer may include acrylic acid, methacrylic acid, 2-(meth)acryloyloxy acetic acid, 3-(meth)acryloyloxy propyl acid, 4-(meth)acryloyloxy butyl acid, an acrylic acid dimer, itaconic acid, or maleic acid, without being limited thereto. Examples of the nitrogen containing monomer may include 2-isocyanatoethyl (meth)acrylate, 3-isocyanatopropyl (meth)acrylate, 4-isocyanatobutyl (meth)acrylate, (meth)acryl amide, N-vinylpyrrolidone, or N-vinylcaprolactam, without being limited thereto.

In the present invention, the monomer mixture includes 70 to 99.9 parts by weight of the (meth)acrylic acid ester monomer and 0.1 to 30 parts by weight of the crosslinking monomer, preferably 75 to 99.9 parts by weight of the (meth)acrylic acid ester monomer and 0.1 to 25 parts by weight of the crosslinking monomer. Within this range, the adhesive can have excellent reliability, handling properties, durability, and re-peeling properties and can effectively prevent separation or peeling due to decrease in initial adhesive strength.

Unless otherwise indicated in the specification, "parts by weight" denotes "ratio by weight."

In the present invention, there is no particular restriction as to a method of manufacturing the acrylic resin by polymerizing the monomer mixture including the foregoing ingredients. For example, a general polymerization method, such as solution polymerization, photo-polymerization, bulk polymerization, suspension polymerization, or emulsion polymerization, may be used.

The adhesive composition for the touch panel of the present invention may include the multifunctional crosslinking agent along with the acrylic resin, and the cohesiveness or tack of the cured product may be adjusted based on the amount of the multifunctional crosslinking agent.

The multifunctional crosslinking agent used in the present invention may include, without being limited to, for example, multifunctional (meth)acrylates. The multifunctional (meth)acrylates are polymeric compounds containing at least two (meth)acrylate moieties.

Examples of the multifunctional (meth)acrylates may include at least one selected from the group consisting of hexanediol di(meth)acrylate, trimethylolpropanetrioxyethyl di(meth)acrylate, alkylene glycol di(meth)acrylate, dialkylene glycol di(meth)acrylate, trialkylene glycol di(meth)acrylate, dicyclopentenyl di(meth)acrylate, dicyclopentenyloxyethyl di(meth)acrylate, neopentyl glycol di(meth)acrylate, dipentaerythritolhexa di(meth)acrylate, trimethylolpropane tri(meth)acrylate, and pentaerythritol tri(meth)acrylate, without being limited thereto.

In the present invention, the multifunctional crosslinking agent is present in an amount of 0.01 to 10 parts by weight, preferably 0.05 to 5 parts by weight, more preferably 0.1 to 3 parts by weight based on 100 parts by weight of the partially polymerized acrylic resin. If the amount of the multifunctional crosslinking agent is less than 0.01 parts by weight, the cohesiveness of the cured product may be reduced, causing bubbles under high-temperature conditions. If the amount of the multifunctional crosslinking agent is greater than 10 parts by weight, the adhesive is excessively cured, causing decrease in adhesive strength and peel strength. Thus, peeling or separation between layers may occur, reducing durability.

The adhesive composition for the touch panel of the present invention may include an urethane acrylate along with the multifunctional crosslinking agent in order to adjust the cohesiveness and tack of the cured product. The urethane acrylate, along with the multifunctional crosslinking agent, may improve the cohesiveness and tack of the cured product and provide a flexible molecular structure.

In the present invention, the urethane acrylate is present in an amount of 0.1 to 10 parts by weight, preferably 0.5 to 5 parts by weight, more preferably 1 to 3 parts by weight based on 100 parts by weight of the partially polymerized acrylic resin. If the amount of the urethane acrylate is less than 0.1 parts by weight, the urethane acrylate may not function properly. If the amount of the urethane acrylate is greater than 10 parts by weight, the adhesive may be excessively cured, reducing tack.

The adhesive composition of the present invention may further include a photoinitiator in order to adjust the degree of polymerization of the adhesive. The photoinitiator is present in an amount of 0.01 to 10 parts by weight, preferably 0.1 to 5 parts by weight based on 100 parts by weight of the partially polymerized acrylic resin.

There is no particular restriction as to the kind of the photoinitiator so long as the photoinitiator can generate radicals upon light irradiation to initiate polymerization. Examples of the photoinitiator may include benzoin, hydroxyketone, or aminoketone initiators, more specifically benzoin, benzoin methyl ether, benzoin ethyl ether, benzoin isopropyl ether, benzoin n-butyl ether, benzoin isobutyl ether, acetophenone, dimethylaminoacetophenone, a,a-methoxy-a-hydroxyacetophenone, 2,2-dimethoxy-2-phenylacetophenone, 2,2-diethoxy-2-phenylacetophenone, 2-hydroxy-2-methyl-1-phenylpropane-1-one, 1-hydroxycyclohexyl phenyl ketone, 2-methyl-1-[4-(methylthio)phenyl]-2-morpholino-propane-1-one, 4-(2-hydroxyethoxy)phenyl-2-(hydroxy-2-propyl)ketone, benzophenone, 4,4'-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, and oligo[2-hydroxy-2-methyl-1-[4-(1-methylvinyl)phenyl]propanone], without being limited thereto. These initiators may be used alone or as mixtures.

As used herein, the term "light irradiation" refers to electromagnetic irradiation which affects the photoinitiator or the polymeric compound to cause polymerization. Electromagnetic radiation collectively includes not only microwaves, infrared radiation, ultraviolet radiation, X-rays, and $\gamma$-rays but also particle beams, such as $\alpha$-particle rays, proton beams, neutron beams, and electron beams.

The adhesive composition of the present invention may further include a silane coupling agent. The coupling agent functions to enhance adhesion and adhesive stability of the cured product to an object, thus improving heat resistance and moisture resistance. Also, the coupling agent may enhance adhesive reliability of the cured product when the cured product is left under high-temperature and/or high-humidity conditions for a long time.

There is no particular restriction as to the kind of the silane coupling agent, and examples of the silane coupling agent may include γ-glycidoxypropyltrimethoxysilane, γ-glycidoxypropylmethyldiethoxysilane, γ-glycidoxypropyltriethoxysilane, 3-mercaptopropyltrimethoxysilane, vinyltrimethoxysilane, vinyltriethoxysilane, γ-methacryloxypropyltrimethoxysilane, γ-methacryloxypropyltriethoxysilane, γ-aminopropyltrimethoxysilane, γ-aminopropyltriethoxysilane, 3-isocyanatopropyltriethoxysilane, or γ-acetoacetate tripropyltrimethoxysilane, which may be used alone or as mixtures.

The silane coupling agent may be present in an amount of 0.005 to 5 parts by weight based on 100 parts by weight of the acrylic resin. If the amount of the silane coupling agent is less than 0.005 parts by weight, increase in tack may be insignificant. If the amount of the silane coupling agent is greater than 5 parts by weight, bubbles or peeling of the adhesive may occur, thus deteriorating durability.

The adhesive composition of the present invention may further include a tackifier resin in view of adjusting tack.

Examples of the tackifier resin may include, without being limited to, for example, a hydrocarbon resin or a hydrogenated product thereof; a rosin or a hydrogenated product thereof; a rosin ester resin or a hydrogenated product thereof; a terpene resin or a hydrogenated product thereof; a terpene phenolic resin or a hydrogenated product thereof; and a polymerized rosin resin or a polymerized rosin ester resin, which may be used alone or as mixtures.

The tackifier resin may be present in an amount of 1 to 100 parts by weight based on 100 parts by weight of the acrylic resin. If the amount of the tackifier resin is less than 1 part by weight, the tackifier resin may not function properly. If the amount of the tackifier resin is greater than 100 parts by weight, improvement in compatibility and/or cohesiveness may be insignificant.

In addition, the adhesive composition of the present invention may further include at least one additive selected from the group consisting of epoxy resins, crosslinking agents, UV stabilizers, antioxidants, toning agents, reinforcing agents, fillers, antifoaming agents, surfactants, and plasticizers so long as the additive does not affect the advantageous effects of the present invention.

The present invention also relates to an adhesive film for a touch panel which includes a base film and an adhesive layer formed on one or both sides of the base film and including a cured product of the adhesive composition according to the present invention.

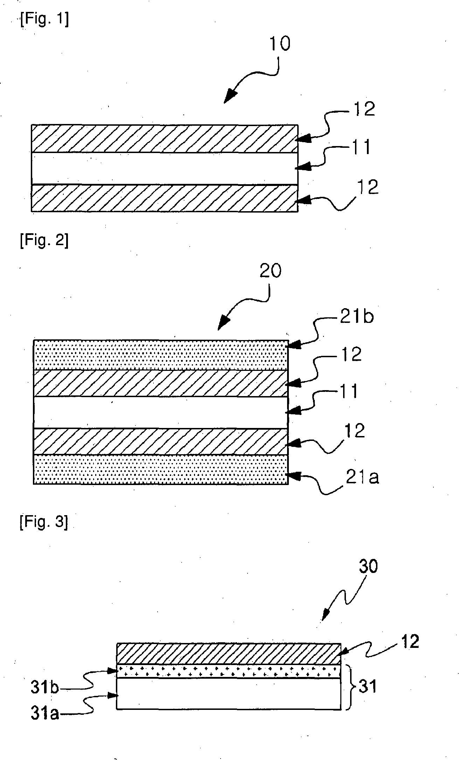

Fig. 1 is a sectional view of an adhesive film 10 according to one embodiment of the present invention. As shown in Fig. 1, the adhesive film 10 may include a base film 11 and adhesive layers 12 on opposite sides of the base film 11. However, the adhesive film of Fig. 1 is provided for illustrative purposes only. That is, in the adhesive film of the present invention, an adhesive layer may be formed on only one side of a base film, or only a sheet-type adhesive layer may be present without a base film as necessary.

There is no particular restriction as to a method of manufacturing the adhesive layers by curing the adhesive composition. In the present invention, for example, the adhesive composition or a coating solution prepared using the same is applied to a proper substrate using a general instrument, e.g., a bar coater, and cured, thereby preparing an adhesive layer.

Curing may be carried out after volatile components or reaction residues included in the adhesive composition or the coating solution, which cause bubbles, are thoroughly removed. Accordingly, decrease in the coefficient of elasticity of the adhesive due to too low a crosslinking density or molecular weight may be prevented. Also, it is possible to prevent a problem that bubbles between adhesive layers at high temperature grow larger and form scatterers.

There is no particular restriction as to a method of curing the adhesive composition or the coating solution. For example, curing may be carried out by irradiating the coating layer with ultraviolet light or aging the coating layer under predetermined conditions.

In the adhesive film, the adhesive layer has a thickness of 50 to 300 μm, preferably 100 to 200 μm. Within this range, the adhesive film can be applied to a thin touch panel or touchscreen and have excellent durability, adhesion, and wettability as well as superior chemical resistance, such as sebum resistance.

There is no particular restriction as to the kind of the base film, and typical plastic films known in the art may be used. Examples of the base film may include at least one selected from the group consisting of a polyethylene terephthalate (PET) film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film. Preferably, a PET film is used, without being limited thereto.

In the adhesive film, the base film has a thickness of 25 to 300 μm, preferably 30 to 200 μm. Within this range, the adhesive film can be applied to a thin touch panel or touchscreen, exhibit excellent durability, adhesion, and wettability as well as superior chemical resistance, such as sebum resistance.

The adhesive film of the present invention may further include a release film formed on the adhesive layers as necessary.

Fig. 2 is a sectional view of an adhesive film 20 according to another embodiment of the present invention. As shown in Fig. 2, the adhesive film 20 may include a base film 11, adhesive layers 12 formed on opposite sides of the base film 11, and release films 21a and 21b formed on the adhesive layers 12.

There is no particular restriction as to the kind of the release films used in the present invention. In the present invention, for example, one surface of various plastic films used as the base film may be subjected to proper release treatment for use as a release film. In this case, examples of a release agent used for release treatment may include alkyd, silicone, fluorine, unsaturated ester, polyolefin, or wax release agents. Among these, alkyd, silicone, and fluorine release agents may be used in view of heat resistance, without being limited thereto.

The thickness of the release film is not particularly limited but may be properly adjusted depending on application. For example, the release film has a thickness of 10 to 100 $\mu$m, preferably 30 to 90 $\mu$m, and more preferably about 40 to 80 $\mu$m.

The present invention also relates to a touch panel which includes a conductive plastic film having a conductive layer formed on one surface thereof; and an adhesive layer attached to the conductive layer of the conductive plastic film and including a cured product of the adhesive composition of the present invention.

The touch panel employing the adhesive composition according to the present invention may be, for example, an electrostatic capacitive touch panel. Also, any structure and any formation method may be employed to prepare such a touch panel, without being particularly limited, so long as the adhesive composition of the present invention is used.

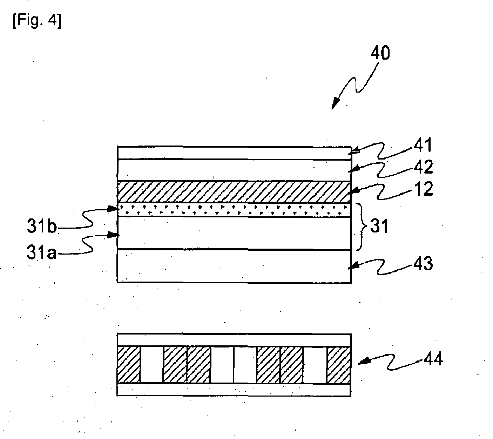

Figs. 3 and 4 are sectional views of touch panels 30 and 40 according to exemplary embodiments of the present invention.

As shown in Fig. 3, the touch panel 30 according to one embodiment of the present invention may include a conductive plastic film 31 including a plastic substrate 31a and a conductive layer 31b formed on one surface of the substrate 31a; and an adhesive layer 12 including a cured product of the adhesive composition of the present invention and attached to the conductive layer 31b of the conductive plastic film 31.

There is no particular restriction as to the kind of the conductive plastic film, and any conductive film known in the art may be used. In one embodiment of the present invention, the conductive film may be a transparent plastic film having an indium tin oxide (ITO) electrode layer formed on one surface thereof. Examples of the transparent plastic film may include a PET film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film. Preferably, a PET film is used, without being limited thereto.

Fig. 4 illustrates a touch panel according to another embodiment of the present invention. As shown in Fig. 4, the touch panel 40 may include an antireflection coating 41, a protective film 42, an adhesive layer 12, a plastic film 31a having a conductive layer 31b formed on one surface thereof, and a transparent substrate 43 from the top. The touch panel 40 including such layers may be attached to a display device, such as a liquid crystal display (LCD) 44. In the structure shown in Fig. 4, the adhesive layer 12 including a cured product of the adhesive composition according to the present invention may be attached to the conductive layer 31b of a conductive plastic film 31.

In the structure of Fig. 4, there is no particular restriction as to the kinds and formation methods of the other elements than the adhesive layer including the cured product of the adhesive composition according to the invention, and any general structure and any general method may be used to prepare the other elements.

**Examples**

Hereinafter, the present invention will be explained in more detail with reference to examples according to the present invention and comparative examples. These examples are provided for illustrative purposes only and are not to be in any way construed as limiting the present invention.

**Preparative Example 1: Preparation of solventless acrylic resin (A)**

55 parts by weight of ethylhexyl acrylate (EHA), 20 parts by weight of isobornyl acrylate (IBOA), and 25 parts by weight of 2-hydroxyethyl acrylate (HEA) were put into a 1L reactor equipped with a reflux condenser for reflux under a nitrogen atmosphere and for easy temperature adjustment and partially polymerized, thereby preparing syrup having a viscosity of 3,500 cps. The resulting partially polymerized acrylic resin (A) has a weight average molecular weight of 1,200,000.

**Preparative Example 2: Preparation of solution-polymerized acrylic resin (B)**

55 parts by weight of EHA, 30 parts by weight of IBOA, and 15 parts by weight of 2-HEA were put into a 1L reactor equipped with a reflux condenser for reflux under a nitrogen atmosphere and for easy temperature adjustment, and ethyl acetate (EAc) as a solvent was added thereto. Subsequently, 0.06 parts by weight of n-octyl mercaptan as a chain transfer agent was added thereto, after which oxygen was purged from the reactor with nitrogen gas for 1 hour, and the temperature of the reactor was elevated to 92°C. The mixture was evenly stirred, followed by addition of 0.03 parts by weight of azobisisobutyronitrile (AIBN) diluted with ethyl acetate to 50% as a reaction initiator. Subsequently, the mixture was reacted and polymerized for 20 minutes and cooled to room temperature, followed by addition of 0.005 parts by weight of hydroquinone as a polymerization inhibitor, thereby partially polymerizing the mixture. The partially polymerized solvent-based acrylic resin (B) has a weight average molecular weight of 1,200,000.

**Example 1**

100 parts by weight of the partially polymerized acrylic resin (A) prepared in Preparative Example 1, 0.1 parts by weight of hexanediol diacrylate as a multifunctional crosslinking agent, 0.2 parts by weight of a coupling agent (KBM 403, Shin-Etsu Chemical Co., Ltd.), 1.5 parts by weight of an urethane acrylate, and 0.3 parts by weight of a photoinitiator (Irgarcure 651, Ciba Specialty Chemicals Corp.) were mixed, thereby preparing a coating solution having a viscosity of 1,500 to 2,500 cps. The coating solution was applied, using a bar coater, to a release-treated PET film (thickness: 75 $\mu$m) to a thickness of 100 $\mu$m after UV curing. The product was cured by ultraviolet irradiation for 10 minutes using a UV lamp, thereby forming an adhesive film.

**Comparative Example 1**

An adhesive film was prepared in the same manner as in Example 1 except that 0.005 parts by weight of hexanediol diacrylate as a multifunctional crosslinking agent was used.

**Comparative Example 2**

An adhesive film was prepared in the same manner as in Example 1 except that the urethane acrylate was not added.

**Comparative Example 3**

100 parts by weight of the partially polymerized acrylic resin (B) prepared in Preparative Example 2, 0.5 parts by weight of an isocyanate crosslinking agent (MDI) as a multifunctional crosslinking agent, and 0.2 parts by weight of a coupling agent were mixed into an adhesive composition, which was then diluted with a solvent, thereby preparing a coating solution. The coating solution was applied using a bar coater to a release-treated PET film (thickness: 75 $\mu$m) to a thickness of 100 $\mu$m after drying. The product was dried at 100°C for about 5 minutes or longer and aged under proper conditions, thereby forming an adhesive film.

The adhesive films of Example 1 and Comparative Examples 1 to 3 were prepared using the adhesive compositions listed in Table 1.

**TABLE 1**

|  |  | Example | Comparative Example | | |
|---|---|---|---|---|---|
|  |  | 1 | 1 | 2 | 3 |
| Acrylic resin | A | 100 | 100 | 100 | - |
|  | B | - | - | - | 100 |
| Multifunctional crosslinking agent | HDDA | 0.1 | 0.005 | 0.1 | - |
|  | NCO | - | - | - | 0.5 |
| Coupling agent |  | 0.2 | 0.2 | 0.2 | 0.2 |
| Urethane acrylate |  | 1.5 | 1.5 | 0 | 0 |
| Photoinitiator |  | 0.3 | 0.3 | 0.3 | 0 |
| Unit: Parts by weight<br>HDDA: Hexanediol diacrylate<br>NCO: Isocyanate (MDI) | | | | | |

(continued)

| | Example | Comparative Example | | |
|---|---|---|---|---|
| | 1 | 1 | 2 | 3 |
| Coupling agent: KBM 403 (Shin-Etsu Chemical Co., Ltd.) | | | | |
| Photoinitiator: Irgacure 651, Ciba Specialty Chemicals Corp.) | | | | |

Physical properties of the adhesive films prepared in the example and the comparative examples were evaluated as follows.

### 1. Gel content

The adhesives prepared in the example and the comparative examples were stored in a room at a constant temperature and humidity (23°C, 60%RH) for about 7 days. Then, 0.3 g of each adhesive was placed on a 200-mesh stainless wire mesh, deposited in 100 mL of ethyl acetate, and stored in a dark room at room temperature for 24 hours. An insoluble fraction was separated and dried in an oven at 120°C for 4 hours, followed by measuring the dry mass thereof. Then, each result of the measurement was substituted into Equation 3, thereby calculating gel content.

### 2. Permeation distance of artificial sebum

After removing the release film from the adhesive films prepared in the example and the comparative examples, each adhesive film was attached to glass and cut into a 1 in x 1 in (width x length) piece, thus preparing a sample. Then, the sample was soaked in artificial sebum (ESTASAN 3580, manufactured by Kosher) for 10 minutes, followed by measuring the distance of the artificial sebum permeating through a lateral side of the sample, that is, a bonded interface between the adhesive and the glass, using a Vernier caliper.

### 3. Chemical resistance

The chemical resistance of each of the adhesive films prepared in the example and the comparative examples was evaluated based on the permeating distance of the artificial sebum as follows.
O: Permeating distance of artificial sebum $\leq$ 0.3 mm
$\Delta$: 0.3 mm < Permeating distance of artificial sebum $\leq$ 0.7 mm
X: 0.7 mm < Permeating distance of artificial sebum
Evaluation results are shown in Table 2.

**TABLE 2**

| | Example | Comparative Example | | |
|---|---|---|---|---|
| | 1 | 1 | 2 | 3 |
| Gel content (%) | 93 | 82 | 80 | 45 |
| Permeating distance of artificial sebum (mm) | 0.2 | 0.5 | 0.6 | 1.2 |
| Chemical resistance | O | $\Delta$ | $\Delta$ | X |

As seen from Table 2, Example 1 including both a multifunctional crosslinking agent and urethane acrylate maintains a gel content of 85% or more and thus exhibits excellent chemical resistance, whereas Comparative Example 1, in which both a multifunctional crosslinking agent and urethane acrylate are used but the amount of the multifunction crosslinking agent is out of the range of the present invention, has a gel content of less than 85% and exhibits insignificant chemical resistance. Also, Comparative Example 2 not including urethane acrylate has a gel content of less than 85% and exhibits insignificant chemical resistance. In addition, Comparative Example 3 not including urethane acrylate and using a heat crosslinking agent as a multifunctional crosslinking agent has a very low gel content and inadequate chemical resistance.
That is, the example using the adhesive composition according to the present invention has a gel content of 85% or more and a permeating distance of the artificial sebum of 0.3 mm or shorter, thereby providing an adhesive film having excellent chemical resistance.

**Claims**

1. An adhesive composition for a touch panel, comprising:

   a partially polymerized acrylic resin;
   a multifunctional crosslinking agent in an amount of 0.01 to 10 parts by weight based on 100 parts by weight of the partially polymerized acrylic resin; and
   an urethane acrylate,

   the adhesive composition satisfying Equations 1 and 2:

   $$\text{Equation 1:} \quad X_1 \geq = 85\% \text{ and}$$

   $$\text{Equation 2:} \quad X_2 \leq 0.3 \text{ mm,}$$

   wherein $X_1$ is the gel content of an adhesive that is a cured product of the adhesive composition, and $X_2$ is the distance of artificial sebum permeating a lateral side of a sample measured after soaking the sample in artificial sebum, the sample being prepared by attaching the adhesive to a substrate, both measured according to the methods indicated in the experimented section.

2. The adhesive composition according to claim 1, wherein the partially polymerized acrylic resin has a weight average molecular weight of 1,000,000 or more.

3. The adhesive composition according to claim 1 or 2, wherein the partially polymerized acrylic resin has a degree of polymerization of 5% to 60%.

4. The adhesive composition according to any one of claims 1-3, wherein the partially polymerized acrylic resin comprises a polymer of a monomer mixture comprising a (meth)acrylic acid ester monomer and a crosslinking monomer.

5. The adhesive composition according to claim 4, wherein the (meth)acrylic acid ester monomer comprises alkyl (meth)acrylates.

6. The adhesive composition according to claim 4, wherein the crosslinking monomer comprises a hydroxyl group containing monomer, a carboxylic group containing monomer, or a nitrogen containing monomer.

7. The adhesive composition according to any one of claims 1-6, wherein the multifunctional crosslinking agent comprises multifunctional (meth)acrylates.

8. The adhesive composition according to claim 7, wherein the multifunctional (meth)acrylates comprise at least one selected from the group consisting of hexanediol di(meth)acrylate, trimethylolpropanetrioxyethyl di(meth)acrylate, alkylene glycol di(meth)acrylate, dialkylene glycol di(meth)acrylate, trialkylene glycol di(meth)acrylate, dicyclopentenyl di(meth)acrylate, dicyclopentenyloxyethyl di(meth)acrylate, neopentyl glycol di(meth)acrylate, dipentaerythritolhexa di(meth)acrylate, trimethylolpropane tri(meth)acrylate, and pentaerythritol tri(meth)acrylate.

9. The adhesive composition according to claim 1, wherein the multifunctional crosslinking agent is present in an amount of 0.01 to 10 parts by weight based on 100 parts by weight of the partially polymerized acrylic resin.

10. The adhesive composition according to any one of claims 1-9, wherein the urethane acrylate is present in an amount of 0.1 to 1 part by weight based on 100 parts by weight of the partially polymerized acrylic resin.

11. The adhesive composition according to any one of claims 1-10, further comprising: a photoinitiator.

12. The adhesive composition according to claim 11, wherein the photoinitiator comprises benzoin, hydroxyketone, or aminoketone initiators.

**13.** An adhesive film for a touch panel comprising:

a base film; and
an adhesive layer formed on one or both sides of the base film and comprising a cured product of the adhesive composition according to any one of claims 1 to 12.

**14.** The adhesive film according to claim 13, wherein the adhesive layer has a thickness of 50 $\mu$m to 300 $\mu$m.

**15.** A touch panel comprising:

a conductive plastic film having a conductive layer formed on one surface thereof; and
an adhesive layer attached to the conductive layer of the conductive plastic film and comprising a cured product of the adhesive composition according to any one of claims 1 to 12.

**Patentansprüche**

**1.** Haftzusammensetzung für einen Berührungsbildschirm, umfassend:

ein teilweise polymerisiertes Acrylharz;
ein multifunktionales Vernetzungsmittel in einer Menge von 0,01 bis 10 Gewichtsanteilen bezogen auf 100 Gewichtsanteile des teilweise polymerisierten Acrylharzes; und
ein Urethanacrylat,
die Haftzusammensetzung, welche die Gleichungen 1 und 2 erfüllt:

Gleichung 1: $X_1 \geq = 85\ \%$ und

Gleichung 2: $X_2 \leq 0{,}3\ \text{mm},$

wobei $X_1$ der Gelgehalt eines Haftmittels ist, welches ein ausgehärtetes Produkt der Haftzusammensetzung ist, und $X_2$ der Abstand von künstlichem Talg ist, der eine laterale Seite einer Probe durchdringt, nachdem die Probe in künstlichem Talg getränkt worden ist, wobei die Probe dadurch hergestellt wird, dass das Haftmittel an einem Substrat angehaftet wird, wobei beide gemäß den in der experimentellen Sektion angegebenen Methoden gemessen sind.

**2.** Haftzusammensetzung nach Anspruch 1, wobei das teilweise polymerisierte Acrylharz eine gewichtsdurchschnittliche Molmasse von 1.000.000 oder mehr aufweist.

**3.** Haftzusammensetzung nach Anspruch 1 oder 2, wobei das teilweise polymerisierte Acrylharz einen Polymerisationsgrad von 5 % bis 60 % aufweist.

**4.** Haftzusammensetzung nach einem der Ansprüche 1-3, wobei das teilweise polymerisierte Acrylharz ein Polymer einer Monomermischung umfasst, die ein (Meth)acrylsäureestermonomer und ein Vernetzungsmonomer umfasst.

**5.** Haftzusammensetzung nach Anspruch 4, wobei das (Meth)acrylsäureestermonomer Alkyl(meth)acrylate umfasst.

**6.** Haftzusammensetzung nach Anspruch 4, wobei das Vernetzungsmonomer ein eine Hydroxylgruppe enthaltendes Monomer, ein eine Carboxylgruppe enthaltendes Monomer oder ein einen Stickstoff enthaltendes Monomer umfasst.

**7.** Haftzusammensetzung nach einem der Ansprüche 1-6, wobei das multifunktionale Vernetzungsmittel multifunktionale (Meth)acrylate umfasst.

**8.** Haftzusammensetzung nach Anspruch 7, wobei die multifunktionalen (Meth)acrylate zumindest eines ausgewählt aus der Gruppe bestehend aus Hexandioldi(meth)acrylat, Trimethylolpropantrioxyethyldi(meth)acrylat, Alkylenglycoldi(meth)acrylat, Dialkylenglycoldi(meth)acrylat, Trialkylenglycoldi(meth)acrylat, Dicyclopentenyldi(meth)acrylat, Dicyclopentenyloxyethyldi(meth)acrylat, Neopentylglycoldi(meth)acrylat, Dipentaerythritolhexadi(meth)acrylat, Trimethylolpropantri(meth)acrylat und Pentaerythritoltri(meth)acrylat umfasst.

9. Haftzusammensetzung nach Anspruch 1, wobei das multifunktionale Vernetzungsmittel in einer Menge von 0,01 bis 10 Gewichtsanteilen bezogen auf 100 Gewichtsanteile des teilweise polymerisierten Acrylharzes vorliegt.

10. Haftzusammensetzung nach einem der Ansprüche 1-9, wobei das Urethanacrylat in einer Menge von 0,1 bis 1 Gewichtsanteil bezogen auf 100 Gewichtsanteile des teilweise polymerisierten Acrylharzes vorliegt.

11. Haftzusammensetzung nach einem der Ansprüche 1-10, ferner umfassend: einen Photoinitiator.

12. Haftzusammensetzung nach Anspruch 11, wobei der Photoinitiator Benzoin-, Hydroxyketon- oder Aminoketoninitiatoren umfasst.

13. Haftfilm für einen Berührungsbildschirm, umfassend:

einen Basisfilm; und
eine Haftschicht, die auf einer oder beiden Seiten des Basisfilms gebildet ist und ein ausgehärtetes Produkt der Haftzusammensetzung nach einem der Ansprüche 1 bis 12 umfasst.

14. Haftfilm nach Anspruch 13, wobei die Haftschicht eine Stärke von 50 $\mu$m bis 300 $\mu$m aufweist.

15. Berührungsbildschirm umfassend:

eine leitende Kunststofffolie, die eine auf einer Oberfläche davon gebildete leitende Schicht aufweist; und
eine Haftschicht, die an der leitenden Schicht der leitenden Kunststofffolie angehaftet ist und ein ausgehärtetes Produkt der Haftzusammensetzung nach einem der Ansprüche 1 bis 12 umfasst.

**Revendications**

1. Composition adhésive pour un écran tactile, comprenant:

une résine acrylique partiellement polymérisée;
un agent de réticulation multifonctionnel dans une quantité comprise entre 0,01 et 10 parties en poids pour 100 parties en poids de la résine acrylique partiellement polymérisée; et
un acrylate d'uréthane,
la composition adhésive satisfaisant les équations 1 et 2:

Equation 1: $X_1 \geq = 85\%$ et

Equation 2: $X_2 \leq 0,3$ mm,

où $X_1$ représente la teneur en gel d'un adhésif qui est un produit durci de la composition adhésive, et $X_2$ est la distance de sébum artificiel imprégnant un côté latéral d'un échantillon, mesurée après l'immersion de l'échantillon dans le sébum artificiel, l'échantillon étant préparé en fixant l'adhésif à un substrat,
les deux étant mesurés selon les procédés indiqués dans la section expérimentale.

2. Composition adhésive selon la revendication 1, dans laquelle la résine acrylique partiellement polymérisée a un poids moléculaire moyen en poids de 1.000.000 ou plus.

3. Composition adhésive selon la revendication 1 ou 2, dans laquelle la résine acrylique partiellement polymérisée a un degré de polymérisation de 5% à 60%.

4. Composition adhésive selon l'une quelconque des revendications 1 à 3, dans laquelle la résine acrylique partiellement polymérisée comprend un polymère d'un mélange de monomères comprenant un ester monomère d'acide (méth)acrylique et un monomère de réticulation.

5. Composition adhésive selon la revendication 4, dans laquelle l'ester monomère d'acide (méth)acrylique comprend des (méth)acrylates d'alkyle.

6. Composition adhésive selon la revendication 4, dans laquelle le monomère de réticulation comprend un monomère contenant un groupe hydroxyle, un monomère contenant un groupe carboxylique, ou un monomère contenant de l'azote.

7. Composition adhésive selon l'une quelconque des revendications 1 à 6, dans laquelle l'agent de réticulation multifonctionnel comprend des (méth)acrylates multifonctionnels.

8. Composition adhésive selon la revendication 7, dans laquelle les (méth) acrylates multifonctionnels comprennent au moins un élément choisi dans le groupe constitué par le di(méth)acrylate d'hexanediol, le di(méth)acrylate de triméthylolpropanetrioxyéthyle, le di(méth)acrylate d'alkylène glycol, le di(méth)acrylate de dialkylène glycol, le di(méth)acrylate de trialkylène glycol, le di(méth)acrylate de dicyclopentényle, le di(méth)acrylate de dicyclopentényloxyéthyle, le di(méth)acrylate de néopentylglycol, le di(méth)acrylate de dipentaerythritolhexa, le tri(méth)acrylate de triméthylolpropane et le tri(méth)acrylate de pentaérythritol.

9. Composition adhésive selon la revendication 1, dans laquelle l'agent de réticulation multifonctionnel est présent dans une quantité comprise entre 0,01 et 10 parties en poids pour 100 parties en poids de la résine acrylique partiellement polymérisée.

10. Composition adhésive selon l'une quelconque des revendications 1 à 9, dans laquelle l'acrylate d'uréthane est présent dans une quantité de 0,1 à 1 partie en poids pour 100 parties en poids de la résine acrylique partiellement polymérisée.

11. Composition adhésive selon l'une quelconque des revendications 1 à 10, comportant en outre un photo-initiateur.

12. Composition adhésive selon la revendication 11, dans laquelle le photo-initiateur comprend des initiateurs benzoïne, hydroxycétone ou aminocétone.

13. Film adhésif pour un panneau tactile, comprenant:

    un film de base; et
    une couche adhésive formée sur un côté ou sur les deux côtés du film de base et comprenant un produit durci de la composition adhésive selon l'une quelconque des revendications 1 à 12.

14. Film adhésif selon la revendication 13, dans lequel la couche adhésive présente une épaisseur comprise entre 50 μm et 300 μm.

15. Panneau tactile comprenant:

    un film de matière plastique conductrice ayant une couche conductrice formée sur une surface de celle-ci; et
    une couche adhésive fixée à la couche conductrice du film de matière plastique conductrice et comprenant un produit durci de la composition adhésive selon l'une quelconque des revendications 1 à 12.

[Fig. 1]

[Fig. 2]

[Fig. 3]

[Fig. 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1574557 A
- EP 2033998 A
- US 2010255253 A